# EUROPÄISCHE PATENTSCHRIFT

(11) **EP 2 918 986 B1**
(45) Veröffentlichungstag und Bekanntmachung des Hinweises auf die Patenterteilung: **16.05.2018**
(21) Anmeldenummer: 14305338.7
(22) Anmeldetag: 10.03.2014
(51) Int. Cl.: G01L 21/24, G01L 19/00

(54) **Vorrichtung zur Bestimmung des Drucks in einem Vakuumraum**
Device for measuring the pressure in a vacuum
Dispositif de détermination de la pression dans une chambre sous vide

(43) Veröffentlichungstag der Anmeldung: 16.09.2015
(73) Patentinhaber: Nexans, 92400 Courbevoie (FR)
(72) Erfinder: Soika, Rainer, 30559 Hannover (DE); Di Palma, Michele, 31832 Springe (DE); Marzahn, Erik, 30853 Langenhagen (DE)
(74) Vertreter: Feray, Valérie

(56) Entgegenhaltungen:
- EP-A- 0 040 405
- US-A- 5 777 233

## Beschreibung

Die Erfindung bezieht sich auf eine Vorrichtung zur Bestimmung des Drucks in einer evakuierten Vakuumkammer, welche einen nach außen abstehenden und vakuumdicht mit der Vakuumkammer verbundenen evakuierten Meßstutzen umfaßt. Der Meßstutzen enthält einen Gasreibungssensor, welcher durch ein von einem in Arbeitsposition auf dem Meßstutzen aufgesetzten Meßkopf erzeugtes Magnetfeld berührungslos angeordnet und in Rotation versetzbar ist.

Eine Vakuumkammer, d.h. ein hermetisch abgedichteter, evakuierter Raum, kann beispielsweise die thermische Isolierung eines vakuumisolierten Flüssiggastanks oder die thermische Isolierung einer vakuumisolierten Rohrleitung zur Führung eines gekühlten Mediums, beispielsweise Helium oder Stickstoff, oder die Vakuumisolierung einer kryogenen Ummantelung eines supraleitenden Kabels sein. Vakuumkammern sind weiterhin als Prozeßkammern, beispielsweise in der Halbleiterindustrie oder der Plasmabeschichtung, bekannt. Die folgenden Ausführungen beziehen sich auf eine Vakuumisolierung stellvertretend für alle anderen möglichen Vakuumkammern.

Gasreibungsvakuummeßgeräte, auch Kugelreibungsvakuummeter genannt, für die Bestimmung des Gasdrucks im Hochvakuumbereich sind bekannt. Sie erlauben die Messung des Drucks bis ca. 10⁻⁵ Pa. In einer Meßkammer, die aus einem horizontal angeordneten Metallrohr bzw. Meßstutzen besteht und räumlich mit einer das zu messende Vakuum enthaltenden Vakuumkammer verbunden ist, wird eine Metallkugel als Gasreibungssensor durch eine Magnetanordnung magnetisch berührungslos gelagert und durch eine Spulenanordnung um eine ortsfeste Rotationsachse in Rotation versetzt. Nach dem Abschalten des Spulenantriebs nimmt die Drehfrequenz der Kugel durch die Gasreibung, d.h. durch den Aufprall von Gasmolekülen auf die Kugel, ab. Daraus läßt sich der Druck des vorhandenen Gases in der Vakuumkammer berechnen und anzeigen. Ein solches Gasreibungsmeßgerät wird beispielsweise in der US 5,777,233 A beschrieben.

Die Magnet- und Spulenanordnung, welche die Kugel berührungslos lagert und antreibt, wird so ausgerichtet, daß der Gasreibungssensor in der Meßkammer um eine vertikale Rotationsachse rotiert und die Symmetrieachse der Magnet- und Spulenanordnung mit der Rotationsachse übereinstimmt. Dafür muß das Metallrohr exakt horizontal ausgerichtet sein, mit tolerierbaren Abweichungen seiner Achse von der Horizontalen von ca. ± 2°. Diese räumliche Anordnung ist erforderlich, um Ungenauigkeiten bei der Messung des Vakuums zu vermeiden. Ein Verkippen der Rotationsachse und damit der Achse des Metallrohrs bewirkt aufgrund der Schwerkraft eine Auslenkung der Kugel aus der Symmetrieachse der Magnet- und Spulenanordnung. Durch die damit an der Kugel wirkenden veränderten Magnetfelder kommt es zu fehlerhaften Gasdruckmeßwerten. Auch ist bei extremen Abweichungen des Metallrohrs von der horizontalen Auslenkung eine Messung gegebenenfalls nicht möglich.

Der Einsatz eines Gasreibungsvakuummeters ist daher insofern störanfällig, als daß das Metallrohr des Meßgeräts, in dem sich der Gasreibungssensor befindet, genau horizontal ausgerichtet werden muß. Dies ist insbesondere in Vakuumanlagen mit dauerhaft angebrachten Meßstutzen für den Anschluß eines Vakuummeters problematisch.

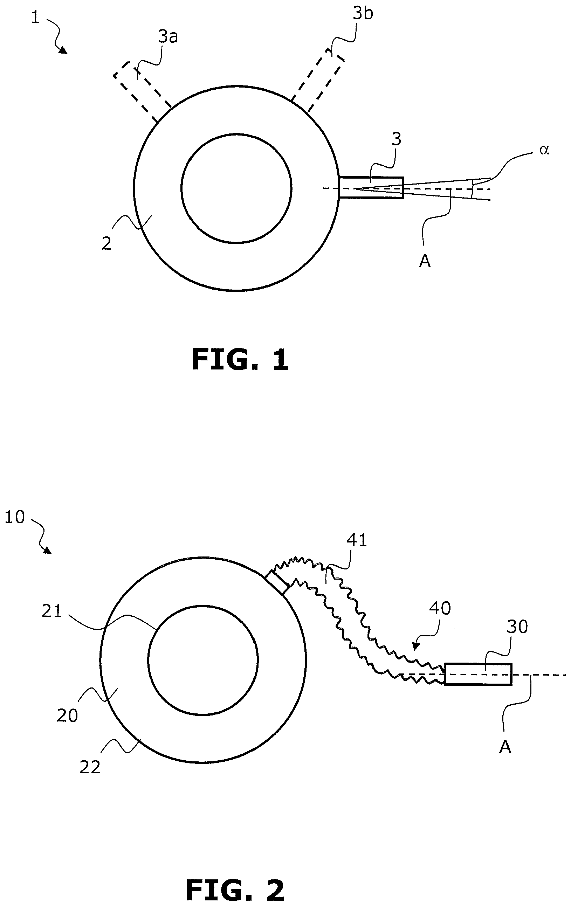

Beispielsweise verfügen vakuumisolierte Leitungen für flüssigen Stickstoff oder vakuumisolierte Ummantelungen für supraleitende Kabel über Endstücke, die unter anderem solche angeschweißten Meßstutzen bzw. Meßkammern aufweisen. Fig. 1 illustriert eine Leitung 1 bzw. deren Endstück mit einer Vakuumkammer 2 im Querschnitt. Zur Vakuummessung wird auf den Meßstutzen 3 ein Meßkopf (nicht dargestellt) aufgesetzt, der die erwähnte Magnet- und Spulenanordnung enthält. Der Meßstutzen 3 muß deshalb entsprechend horizontal ausgerichtet sein. Die tolerierbare Abweichung α der Achse A des Meßstutzens 3 ist ebenfalls dargestellt. Die Ausrichtung bzw. deren Korrektur ist während bzw. nach dem Einziehen der vakuumisolierten Leitung 1 nicht immer möglich. So kann es beispielsweise vorkommen, daß sich der Meßstutzen 3 nach dem Einziehen der Leitung 1 in einer der Positionen 3a oder 3b befindet, in welchen eine fehlerfreie Vakuummessung durch die von der Horizontalen abweichende Ausrichtung des Meßstutzens 3 unmöglich ist. Des weiteren kann der starr von der Vakuumkammer 2 abstehende Meßstutzen 3 während des Einziehens der Leitung 1 stören oder auch beschädigt werden. Auch ist der vorstehende Meßstutzen 3 sowohl bei Leitungen als auch bei Tanks und anderen Vakuumkammern beschädigungsanfällig.

Der Erfindung liegt die Aufgabe zugrunde, eine Vorrichtung zur korrekten Messung eines Vakuums mit einem Gasreibungsvakuummeßgerät in einer räumlich beliebig orientierten Vakuumkammer bereitzustellen.

Diese Aufgabe wird gemäß der Erfindung dadurch gelöst, daß zwischen der Vakuumkammer und dem Meßstutzen ein biegbares Metallrohr angeordnet ist, das mit einem Ende vakuumdicht mit dem Meßstutzen und mit dem anderen Ende vakuumdicht mit der Vakuumkammer verbunden ist.

Die erfindungsgemäße Vorrichtung erlaubt die Messung der Größe des Vakuums, d.h. des Drucks, unabhängig von der Orientierung der Vakuumkammer und unabhängig davon, wo die Anschlußstelle des biegsamen Metallrohrs an der Vakuumkammer liegt. In Arbeitsstellung, wenn eine Vakuummessung durchgeführt werden soll, kann der Meßstutzen deshalb stets horizontal ausgerichtet werden. Dadurch ist eine fehlerfreie Messung des Vakuums in der Vakuumkammer gewährleistet. In Ruhestellung, wenn der Meßstutzen nicht benötigt wird, kann das biegsame Metallrohr samt dem Meßstutzen dicht an der Vakuumkammer anliegend gelagert werden, sodaß der Meßstutzen bei der Installation der Vakuumkammer, beispielsweise beim Einziehen einer vakuumisolierten Leitung, nicht stört bzw. nicht beschädigt wird. Von besonderem Vorteil ist, daß sich die erfindungsgemäße Vorrichtung mit allen möglichen Vakuumkammern zur Anwendung bringen läßt. Weiterhin ist die Vorrichtung sehr einfach herstellbar und läßt sich prinzipiell auch an bereits bestehenden Vakuumkammern installieren, da sie keine Umgestaltung der Vakuumkammer selbst erfordert.

Ausführungsbeispiele des Erfindungsgegenstandes sind in den Zeichnungen dargestellt. Es zeigen:
Fig. 1, bereits oben beschrieben, schematisch einen Querschnitt einer vakuumisolierten Leitung mit einem Meßstutzen zur Bestimmung des Vakuums in der Vakuumkammer,
Fig. 2 schematisch einen Querschnitt einer vakuumisolierten Leitung mit einer Vorrichtung gemäß der Erfindung in Arbeitsstellung,
Fig. 3 schematisch eine Vakuumkammer mit in Ruhestellung befindlicher Vorrichtung nach einer ersten Variante, und
Fig. 4 schematisch eine Vakuumkammer mit in Ruhestellung befindlicher Vorrichtung nach einer zweiten Variante.

Die Erfindung wird im folgenden am Beispiel einer Rohrleitung erläutert. Die Vakuumisolierung der Rohrleitung wird wieder stellvertretend für alle anderen möglichen Vakuumkammern, von denen einige eingangs genannt wurden, als Beispiel herangezogen.

In Fig. 2 ist schematisch im Querschnitt eine Vakuumkammer 20 einer Leitung 10 gezeigt, die mit einer erfindungsgemäßen Vorrichtung 40 ausgerüstet ist. Die Leitung 10 kann beispielsweise eine Flüssiggasleitung oder eine kryogene Ummantelung eines supraleitenden Kabels sein. Die Vakuumkammer 20 ist aus dem hermetisch abgedichteten und evakuierten Raum zwischen zwei konzentrisch angeordneten Metallrohren 21, 22 gebildet. Die beiden Metallrohre 21, 22 können beispielsweise aus Edelstahl bestehen. Sie können durch Abstandshalter (nicht dargestellt) aus Kunststoff in ihrer gegenseitigen Position gehalten werden.

Die erfindungsgemäße Vorrichtung 40 zur Bestimmung der Größe des Vakuums, d.h. des Drucks, in der Vakuumkammer 20 umfaßt einen Meßstutzen 30, welcher einen Gasreibungssensor (nicht dargestellt) enthält. Der evakuierte Meßstutzen 30 ist hermetisch dicht mit der Vakuumkammer 20 verbunden und enthält ebenfalls das zu messende Vakuum. Die hermetisch dichte Verbindung zwischen Meßstutzen 30 und Vakuumkammer 20 ist durch ein biegbares Metallrohr 41 hergestellt, welches zwischen der Vakuumkammer 20 und dem Meßstutzen 30 angeordnet und mit einem Ende vakuumdicht mit dem Meßstutzen 30 und mit dem anderen Ende vakuumdicht mit der Vakuumkammer 20 verbunden ist.

Das biegbare Rohr 41 ist vorzugsweise ein in bekannter Weise mit einer Schrauben- oder Parallelwellung versehenes Metallrohr. Das biegbare Metallrohr 41 kann beispielsweise aus Edelstahl, Aluminium, Kupfer, einer Nickellegierung oder aus einem anderen geeigneten Metall bestehen. Es hat bei häufig vorkommenden Abmessungen von vakuumisolierten Rohrleitungen beispielsweise einen Durchmesser von 5 - 12 mm und ist 5 - 50 cm lang. Das biegbare Metallrohr 41 wird vorzugsweise durch Schweißen mit dem Meßstutzen 30 und der Vakuumkammer 20 verbunden.

Der Gasreibungssensor ist durch ein von einem in Arbeitsposition auf dem Meßstutzen 30 aufgesetzten Meßkopf (nicht dargestellt) erzeugtes Magnetfeld berührungslos angeordnet und in Rotation versetzbar. Der Gasreibungssensor ist vorzugsweise eine Kugel, beispielsweise aus Edelstahl. Durch das biegbare Metallrohr 41 wird gewährleistet, daß die Achse A des Meßstutzens 30 in Arbeitsposition, wie in Fig. 2 dargestellt, horizontal ist, sodaß eine korrekte Vakuummessung durchgeführt werden kann.

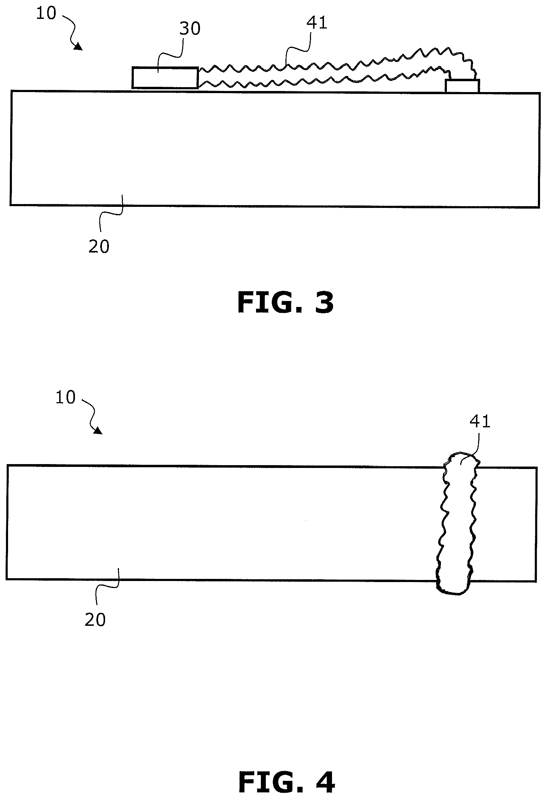

In den Fig. 3 und 4 sind beispielhaft zwei Möglichkeiten gezeigt, wie die erfindungsgemäße Vorrichtung 40 in Ruhestellung an der Vakuumkammer gelagert werden kann. In Fig. 3 ist das biegbare Metallrohr 41 einschließlich des Meßstutzens 30 entlang der Leitung 10 (bzw. entlang deren Endstück) parallel zu dieser und an dieser anliegend gelagert. In Fig. 4 ist das biegbare Metallrohr 41 um den Umfang der Leitung 10 (bzw. ihres Endstücks) herum an dieser anliegend gelagert (der Meßstutzen ist nicht gezeigt). Eine zusätzliche Vorrichtung zur Befestigung und zum Schutz des Meßstutzens 30 in Ruhestellung ist mit Vorteil in Verbindung mit dem Meßstutzen 30 angebracht. Diese und weitere Arten der Lagerung der Vorrichtung 40 in Ruhestellung sind sowohl auf vakuumisolierte Leitungen als auch auf andere mögliche Vakuumkammern anwendbar.

In einer besonders vorteilhaften Ausführungsform weist die Vakuumkammer 20 an ihrer Außenseite eine geeignete Aussparung (nicht dargestellt) auf, die so gestaltet ist, daß der Meßstutzen 30 in Ruhestellung in dieser gelagert werden kann. Dadurch steht der Meßstutzen 30, beispielsweise beim Einziehen der Leitung 10, nicht hervor, und eine Beschädigung desselben kann vermieden werden. Alternativ und zusätzlich kann der Meßstutzen 30 in Ruhestellung auch von einer an der Vakuumkammer 20 angebrachten Schutzabdeckung überdeckt sein.

## Patentansprüche

1. Vorrichtung (40) zur Bestimmung des Drucks in einer evakuierten Vakuumkammer (20), welche einen außerhalb der Vakuumkammer (20) angeordneten und vakuumdicht mit der Vakuumkammer (20) verbundenen evakuierten Meßstutzen (30) umfaßt, welcher einen Gasreibungssensor enthält, welcher durch ein von einem in Arbeitsposition auf dem Meßstutzen (30) aufgesetzten Meßkopf erzeugtes Magnetfeld berührungslos angeordnet und in Rotation versetzt ist, **dadurch gekennzeichnet, daß** zwischen der Vakuumkammer (20) und dem Meßstutzen (30) ein biegbares, mit einer Schrauben- oder Parallelwellung versehenes Metallrohr (41) angeordnet ist, das mit einem Ende vakuumdicht mit dem Meßstutzen (30) und mit dem anderen Ende vakuumdicht mit der Vakuumkammer (20) verbunden ist und dass der Meßstutzen (30) in Arbeitsposition horizontal ausgerichtet ist.

2. Vorrichtung (40) nach Anspruch 1, **dadurch gekennzeichnet, daß** der Gasreibungssensor eine Kugel ist.

3. Vorrichtung (40) nach Anspruch 1 oder 2, **dadurch gekennzeichnet, daß** die Vakuumkammer (20) aus zwei konzentrisch und mit Abstand zueinander angeordneten Rohren (21, 22) aus Metall besteht, zwischen denen das Vakuum erzeugt ist.

4. Vorrichtung (40) nach einem der Ansprüche 1 bis 3, **dadurch gekennzeichnet, daß** das biegbare Metallrohr (41) einschließlich des Meßstutzens (30) in Ruhestellung außen an der Vakuumkammer (20) anliegend gelagert ist.

5. Vorrichtung (40) nach Anspruch 4, **dadurch gekennzeichnet, daß** die Vakuumkammer (20) an ihrer Außenseite eine Aussparung zur Lagerung des Meßstutzens (30) aufweist.

6. Vorrichtung (40) nach einem der vorangehenden Ansprüche, **dadurch gekennzeichnet, daß** das biegbare Metallrohr (41) aus Edelstahl, Aluminium, Kupfer oder einer Nickellegierung besteht.

## Claims

1. A device (40) for determining the pressure in an evacuated vacuum chamber (20), which comprises an evacuated measurement connecting piece (30) arranged outside the vacuum chamber (20) and connected vacuum-tightly with the vacuum chamber (20), which contains a gas friction sensor, which is arranged and set into rotation without contact by a magnetic field generated by a measurement head placed on the measurement connecting piece (30), **characterized in that** between the vacuum chamber (20) and the measurement connecting piece (30) a bendable metal tube (41) provided with a screw- or parallel corrugation is arranged, which is connected with one end vacuum-tightly to the measurement connecting piece (30) and with the other end vacuum-tightly to the vacuum chamber (20) and that the measurement connecting piece (30) is aligned horizontally in the working position.

2. A device (40) according to Claim 1, **characterized in that** the gas friction sensor is a sphere.

3. A device (40) according to Claim 1 or 2, **characterized in that** the vacuum chamber (20) consists of two tubes (21, 22) made from metal arranged concentrically and at a distance from one another, between which the vacuum is generated.

4. A device (40) according to any one of Claims 1 to 3, **characterized in that** the bendable metal tube (41) including the measurement connecting piece (30) is mounted in the rest position abutting against the vacuum chamber (20) on the outside.

5. A device (40) according to Claim 4, **characterized in that** the vacuum chamber (20) has a recess on its outside for mounting the measurement connecting piece (30).

6. A device (40) according to any one of the preceding claims, **characterized in that** the bendable metal tube (41) consists of stainless steel, aluminum, copper or a nickel alloy.

## Revendications

1. Dispositif (40) pour la détermination de la pression dans une chambre à vide évacuée (20) qui comprend un embout de mesure (30) évacué, disposé à l'extérieur de la chambre à vide (20) et relié de manière étanche au vide avec la chambre à vide (20), qui comprend un capteur de friction de gaz qui est disposé et mis en rotation sans contact par un champ magnétique généré par une tête de mesure posé, en position de travail, sur l'embout de mesure (30), **caractérisé en ce que**, entre la chambre à vide (20) et l'embout de mesure (30) est disposé un tube métallique (41) flexible muni d'une ondulation hélicoïdale ou une ondulation parallèle, qui est relié avec une extrémité de manière étanche au vide avec l'embout de mesure (30) et avec l'autre extrémité de manière étanche au vide avec la chambre à vide (20) et **en ce que** l'embout de mesure (30) est orienté horizontalement en position de travail.

2. Dispositif (40) selon la revendication 1, **caractérisé en ce que** le capteur de friction de gaz est une sphère.

3. Dispositif (40) selon la revendication 1 ou 2, **caractérisé en ce que** la chambre à vide (20) est constituée de deux tubes (21, 22) en métal disposés de manière concentrique et avec une certaine distance entre eux, entre lesquels le vide est généré.

4. Dispositif (40) selon l'une des revendications 1 à 3, **caractérisé en ce que** le tube métallique flexible (41) y compris l'embout de mesure (30) est logé de façon à s'appuyer, en position de repos, à l'extérieur contre la chambre à vide (20).

5. Dispositif (40) selon la revendication 4, **caractérisé en ce que** la chambre à vide (20) comprend, sur son côté extérieur, un évidement pour le logement de l'embout de mesure (30).

6. Dispositif (40) selon l'une des revendications précédentes, **caractérisé en ce que** le tube métallique flexible (41) est constitué d'acier inoxydable, d'aluminium, de cuivre ou d'un alliage de nickel.
